# EUROPEAN PATENT APPLICATION

(11) **EP 4 800 911 A1**
(43) Date of publication of application: **02.09.2026**
(21) Application number: 25160544.0
(22) Date of filing: 27.02.2025
(51) Int. Cl.: H02P 6/00, B65G 54/02, H02K 41/02, H02P 23/00, H02P 25/06

(54) **OPERATING A LINEAR MOTOR SYSTEM**

(71) Applicant: ABB SCHWEIZ AG, 5400 Baden (CH)
(72) Inventor: Plainer, Manuel, 4890 Weißenkirchen i.A. (AT); Weber, Andreas, 5020 Salzburg (AT); Kemmetmüller, Wolfgang, 1140 Wien (AT); Fuchs, Gerd, 1100 Wien (AT)
(74) Representative: Weiss Patentanwalts GmbH

(57) **Abstract**

The invention relates to a method of operating a linear motor system and to a corresponding linear motor system (1), in particular in the form of a long-stator linear motor system or a planar motor system, comprising a stator (2), on which a plurality of drive coils (4) is arranged, and comprising at least one shuttle (3), on which drive magnets (5) are arranged and which moves relative to the stator (2). An electromagnetic field, which interacts with the drive magnets (5) of the shuttle (3), is generated by energizing the drive coils (3) in the area of the drive magnets (5) of the shuttle (3). To enable a more efficient operation of the linear motor system (1) and to enhance a control of the movement of the at least one shuttle (3) on the stator (2) of the linear motor system (1), at least one drive variable (DV) is determined by a motion control unit (7) from a predefined movement profile (MP) and/or at least one predefined target value (MP) of at least one movement variable for the at least one shuttle (3) and from an actual value (IP) of the at least one movement variable for a respective time step (S101). Furthermore, the motion control unit (7) determines the respective drive coils (4) of the stator (2) to be energized and a corresponding energization (BS) of these drive coils (4) from the at least one drive variable (DV) determined for the respective time step (S103), to move the shuttle (3) corresponding to the predefined movement profile and/or according to the at least one predefined target value (MP) of at least one movement variable. The motion control unit (7) uses an Artificial intelligence method (Al) at least for determining the respective drive coils (4) of the stator (2) to be energized and a corresponding energization (BS) of these drive coils (4) for moving the at least one shuttle (4), wherein the Artificial intelligence method (Al) is provided with the at least one drive variable (DV) determined for the respective time step as an input variable (S102).

## Description

### TECHNICAL FIELD OF THE INVENTION

The present invention relates generally to the field of industrial automation systems. In particular, the invention relates to a method for operating a linear motor system, in particular a long-stator linear motor system or a planar motor system, comprising a stator, on which a plurality of drive coils is arranged, and comprising at least one shuttle, which moves relative to the stator and on which several drive magnets are arranged, wherein an electromagnetic field, which interacts with the drive magnets of the at least one shuttle for moving the at least one shuttle, is generated by energizing drive coils in the area of the drive magnets of the at least one shuttle. Furthermore, the invention relates to a corresponding linear motor system.

### BACKGROUND INFORMATION

Nowadays, linear motor systems are widely used in most of the modern manufacturing and production facilities to provide and perform different automated operational tasks, in particular moving products and/or objects between workstation of a production line or transporting objects and/or products in production lines, etc., during manufacturing and production processes.

In a linear motor system, a primary part (stator) and a secondary part (rotor) are provided, wherein the secondary part is arranged to be movable relative to the primary part. Drive coils are arranged on the primary part or stator and drive magnets are arranged on the secondary part or rotor, or vice versa. Permanent magnets, electrical coils or short-circuit windings may be used as drive magnet. The drive coils are usually electrical coils that are energized to generate an electromagnetic field. Due to the interaction of the (electro)magnetic fields of the drive magnets and drive coils, forces act on the secondary part of the linear motor system. These forces move the secondary part relative to the primary part of the linear motor system, which may be designed as synchronous machine or asynchronous machine, for example. A distinction can be made between short-stator linear motor systems and long-stator linear motor systems. The secondary part is shorter than the primary part in the long-stator linear motor system, wherein the primary part is shorter than the secondary part in the short-stator linear motor. A linear motor system may also be configured as a planar linear motor system, which is also called planar motor system. In the planar motor system, the primary part is usually larger than the secondary part. The drive coils of a linear motor system can either be arranged along a movement path formed by the secondary part, e.g., in a long-stator linear system, or in a movement plane, e.g., in a planar motor system. The secondary part can be moved along the movement direction or can be moved freely, e.g. in accordance with a predefined movement profile, in the movement plane in at least two movement directions.

Linear motor systems are often used in complex automation system, such as electromagnetic transport systems, for example. In an electromagnetic transport system, a shuttle or transport unit is moved to perform transport tasks, wherein the shuttle or transport unit can be configured as secondary part or primary part. Usually, such a complex automation system or transport system is configured in the form of a long-stator linear motor system (or LLM for short) or a planar motor system (or PM for short). Both - LLMs and PMs, their applications and the mode of operation are well known from state of the art.

A long-stator linear motor system comprises a stator, which is usually composed of a plurality of stator segments. The stator segments can have different geometries (e.g., straight lines, curves, track switches, dual tracks, etc.) and can be assembled into a desired stator by lining them up accordingly. The drive coils are usually arranged in fixed positions to each other on the stator or the stator segments. For the linear motor system according to the invention, however, the use of such stator segments, the number of such stator segments as well as the number and arrangement of the drive coils on the stator segment are irrelevant. The stator or the assembly of the stator segments then forms a movement track or movement path, along which at least one shuttle, usually a plurality of shuttles, is moved. For this purpose, a magnet unit, comprising a number of drive magnets (e.g., permanent magnets, electrical coils, short-circuit windings, etc.), is arranged on the shuttle. The magnetic field of the drive magnets interact with an electromagnetic field generated by energizing the drive coils of the stator or the stator segment in the area of the magnet unit of the shuttle. The interaction of the (electro)magnetic fields of the drive magnets and of the energized drive coils exerts driving forces on the shuttle that move the shuttle along the movement path formed by the stator. In particular, the driving forces comprise a propulsive force, acting on the shuttle in the direction of movement along the stator, and a normal force (in the direction traverse to the direction of movement). The shuttles are magnetically held and guided along the stator, by using e.g., corresponding guiding elements on the shuttle (e.g., rollers) and along the stator (e.g., guide rails).

Planar motor systems are used, for example, in production processes or transport processes which require more complex movement profiles. A planar motor system also comprises a stator like the LLM system. However, the stator of the planar motor system forms a movement plane. The stator often comprises several stator segments, which may be connected in virtually any pattern from squares, rectangles to complex movement paths to traverse around other equipment or to link different working stations of a production process, for example. Usually, one or more shuttles are moved on the movement plane formed by the stator. For this purpose, drive coils are arranged in at least one plane on the stator, wherein, as with the LLM system, the number and arrangement of the drive coils on the stator as well as the number of stator modules are irrelevant for the present invention. Each shuttle, usually, comprises a magnet unit with drive magnets (e.g., permanent magnets, electrical coils, etc.), being arranged at least two dimensionally on the shuttle. These drive magnets of the shuttles interact electromagnetically with an electromagnetic field generated by energizing the drive coils of the stator. The interaction of the (electro)magnetic fields generates driving forces acting on the shuttle. These driving forces may comprise a propulsive force being used to move the shuttle according to a predefined or desired movement profile on the movement plane formed by the stator, for example, as well as a levitation force to lift the shuttle of the stator surface creating an air gap between the shuttle and the stator surface. Additionally, the driving forces may comprise tilting forces or moments of force (or torques) to rotate or to tilt the shuttle while moving and/or being lifted.

Usually, a linear motor system (e.g., LLM system, PM system) comprises a control arrangement with one or more control units, which controls the energization of the drive coils or different drive coil groups arranged on the stator for generating necessary electromagnetic field and thus the movement of the shuttles according to predefined and desired movement profiles on the stator. The resulting forces, in particular driving forces, which are generated by the interaction of the magnetic field of the drive magnets on the respective shuttle and of the electromagnetic field generated by energizing the drive coils of the stator in the area of the drive magnets of the respective shuttle, can be influenced by controlling the individual drive coils to regulate the generated magnetic flux. This allows the respective shuttle to be moved along the movement path defined by the stator of a LLM system or on the movement plane formed by the stator of a PM system in a desired manner (e.g. to a predefined position at a predefined speed and/or with a predefined acceleration) by generating a magnetic field that moves in the direction of movement by controlling the drive coils. It is also possible to arrange a large number of shuttles on the stator, the movements of which can be controlled individually and independently of each other by energizing the drive coils interacting with the individual shuttle, usually by applying an electrical voltage or an electrical current.

Long-stator linear motor systems are known, for example, from WO 2013/143783 A1 or US 2013/0074724 A1. The basic structure of a planar motor system and their mode of operation are disclosed in WO 2013/059934 A1 or WO 2019/129576 A1, for example.

The at least one control unit, which often comprises several controllers or a controller cascade consisting of several successive controllers, is used to control the forces and/or torques acting on the shuttle within the control arrangement of the linear motor system. This control unit compensates for a deviation between a predefined movement profile and/or predefined target values of movement variables, like e.g., target position and/or target speed and/or target acceleration, for the respective shuttle and actual values of movement variables, like e.g., actual position and/or actual speed and/or actual acceleration of the respective shuttle. A plurality of control units is often provided along the stator, for example one control unit per stator segment (as described in 3 422 558 A1). The control unit uses an implemented control strategy to determine an actuating variable, e.g., electrical currents or voltages to be applied to the drive coils, which is then converted at the linear motor. For example, the actuating variable is converted by power electronics for the drive coils, i.e. generated and applied to the drive coils.

To design and develop such a control strategy, an attempt is often made to describe the physical behavior of the linear motor system using a physically based, analytical model, for example, and to derive a suitable control strategy from using the physically based, analytical model. The driving forces and/or torques required to control the movement of the shuttle can be described mathematically by the following relationship (1), for example: $F = f \left(i, s, q, p\right) ;$ wherein F represents a vector of necessary driving forces and/or torques, i represents a current vector, s represents a position of the shuttle, q represents any vector representing additional time-varying variables, and p represents a vector that comprises material properties and geometric variables, for example. In case of controlling the movement of the shuttle, in particular in case of controlling the position of the shuttle on the stator and/or the speed of the movement of the shuttle, the actuating variable will represent the desired driving forces and/or moments necessary to move the shuttle, e.g. to a desired position and/or at a desired speed. This means that the descriptive model must be available in inverse form so that the necessary electrical currents for energizing the drive coils can be determined as actuating variable. The fundamental wave model or the reluctance model, for example, represent model approaches that may be used to describe a mapping of desired driving forces and/or torques (e.g., in the form of vector) as input variables on the energization of the individual drive coils as output variables.

If, for example, the fundamental wave model is used to simulate the physical behavior of the linear motor system either in the form of a LLM system or of a PM system, it is common to use a so-called dq-coordinate system that moves with the shuttle (in case of a PM system also separately in the movement directions), while controlling the movement of a shuttle - analogously to rotative motors and/or drives. Controlling a long-stator linear motor system based on a dq-coordinate system is described, for example, in Khong, PC., et al., "Magnetic guidance of the mover in a long-primary linear motor," IEEE Transactions on Industry Applications, Vol. 47, No. 3, May/June 2011, pp. 1319-1327*.*

A drive current necessary for the desired movement of the shuttle on the stator is then calculated within the dq-coordinate system comprising, for example, a current component, often referred to as q-component, in the movement direction and possibly a current component in the normal direction (i.e., transverse to the movement direction), often also referred to as d-component). The q-component is responsible for generating the propulsive force, for example, and the d-component for generating a normal force traverse to the propulsive force. I.e., the necessary driving forces and/or torques for moving the shuttle are converted into a two-dimensional current system, e.g., the dq-coordinate system, using force constants and/or a force function. The drive current calculated in the dq-coordinate system is then converted into coil currents of the drive coils involved into the generation of the driving forces and/or torques with an inverse dq-transformation (e.g., Park transformation or Clarke transformation), analogously to rotative motors and/or drives. These coil currents are then generated by applying a corresponding voltage to the drive coils generated by a respective power electronics arrangement, for example. This is repeated with a time step predefined for the controlling of the linear motor system, typically in the range of 1/10 milliseconds. Due to the movement of the shuttle on stator, various drive coils are involved. Since several shuttles may move on the stator, which may comprise several stator segments being controlled by different control units, it may occur that at least two or more shuttle require the energization of the drive coils for the movement or change from one stator segment to another. These specific situations have to be considered when designing the control strategy used by the individual control units. So, a specific function (e.g., optimizing function, quality functional, etc.) has also to be implemented to secure that resulting current distribution is based on optimal considerations, for example.

Alternatively, the so-called reluctance model may be used to describe a mapping of desired driving forces and/or torques (e.g., in the form of vector) as input variables on the energization of the individual drive coils as output variables. In this case, modelling the physical behavior of the linear motor system is more complex and can only be solved numerically, if non-linear effects, like e.g., saturation effects, etc., are considered, for example. In these cases, optimization methods to solve non-linear optimization problems (e.g., like nonlinear programming, etc.) are used. As these methods are very computationally intensive and numerically demanding, the solutions are often determined in advance and offline. The linear motor system then provides with lookup tables, for example, to determine the drive coils currents during the cyclic control loop of e.g. position control or speed control of the shuttles. This having the disadvantage that the individual and costumer specific adaption is hardly possible.

Even if the modelling as described above based on the fundamental wave model or the reluctance model, for example, may be considered as a trivial task to be solved with rotative motors and drives without saturation, it may be a quite complex task to solve with linear motor systems, in particular with planar motor systems having a lot of degrees of freedom concerning the movement of one or more shuttles to be considered. In many cases, the inverse dq-transformation cannot be solved directly, as more degrees of freedom (e.g. coil currents, coils to be energized, etc.) are available for setting the desired driving forces and/or torques. In these cases, appropriate simplifications or intensive mathematical methods (e.g. non-linear optimization strategies, Model Predictive Control (MPC), Sequential Quadratic Programming (SQP), etc.) has to be used. However, this may mean that the descriptive quality of the used model has to be reduced having a negative influence on the efficiency and accuracy of the control of e.g., a shuttle position, shuttle speed, etc., which leads to restrictions and a reduction of the control quality, or the computational effort will increase immensely, which makes more powerful hardware and possibly larger memories necessary leading also to an increase for the costs for the linear motor system.

### SUMMARY

Against this background, the present invention is based on the task to provide a method for operating a linear motor system and a linear motor system, which enable a more efficient operation of the linear motor system, in particular a more efficient and more accurate control of a required energization of the drive coils and/or of a positioning of the at least one shuttle on the stator, and an improved adaptation to a real physical behavior of the linear motor system, in particular by taking into account effects which cannot or can hardly be modeled.

These and other objectives are solved by a method and a system according to the independent claims. Advantageous embodiments of the present invention are described by the dependent claims.

According to the invention, these and other objectives are achieved by a method for operating a linear motor system, wherein at least one drive variable is determined for a respective time step from a predefined movement profile and/or a predefined target value of at least one movement variable for the at least one shuttle and from an actual value of the at least one movement variable of the at least one shuttle, wherein an Artificial intelligence method or, Al method for short, is provided with the at least one drive variable determined for the respective time step as an input variable, and wherein the Al method determines the drive coils of the stator to be energized and a corresponding energization of the determined drive coils to be energized from at least one drive variable for the respective time step, to move the at least one shuttle corresponding to the predefined movement profile and/or according to the predefined target value of the at least one movement variable.

The main aspect of the present invention is that an Al method is used at least partially for the control process of the movement of the individual shuttles used during the operation of the linear motor system. The Al method may be trained using training data provided by a test environment using a physical model and/or gather during life-operation of other linear motor system. The usage of high-quality training data makes it possible to learn the necessary correlations in the control of the linear motor system, especially in the position control of the shuttles. Furthermore, aspects of the operation of a linear motor system (e.g. saturation effect, cogging, complex local field profiles, etc.) can be considered and learned, which are often neglected when describing the physical behavior of a linear motor system using physical-based, analytic models (e.g., first-principle models) and developing a control strategy based on this. So, the usage of the Al method at least for parts of the control process leads to greater accuracy and/or higher efficiency in the operation of the linear motor system, especially in position control and/or, when determining the drive coils to be energized and the energization of these drive coils. As a result, the use of the Al method also achieves a higher control quality in real-life operation of the linear motor system. In addition, the use of the Al method also offers the possibility of customer-specific and individual adaptation, e.g. by partially training the Al method on the finished linear motor system. Hence, using an Al method at least for determining the drive coils of the stator to be energized and a corresponding energization of the determined drive coils to be energized from at least one drive variable for the respective time step, leads to a more accurate and more efficient control process during the operation of the linear motor system.

In a preferred embodiment of the method for operating the linear motor system, the Al method also determines the at least one drive variable for the respective time step from the predefined movement profile and/or from the predefined target value of the at least one movement variable for the at least one shuttle and the actual value of the at least one movement variable of the at least one shuttle as input variables. Particularly in the case of complex control approaches, using the Al method offers the possibility of making the control (e.g. position control) of the linear motor system more performant. This offers the possibility of implementing a real-time capable control strategy on appropriately tailored hardware, for example.

Furthermore, it is advantageous, when the actual value of the at least one movement variable of the at least one shuttle is estimated by using the predefined movement profile and/or is determined using sensor values being provided by at least one sensor arrangement of the linear motor system. I.e., that the actual value of the at least one movement variable may be either measured using a sensor arrangement (e.g., position sensors, camera system, etc.) provided by the linear motor system or retrieved from sensor values provided in the linear motor system or estimated using sensor values and/or internal states derived from the control process in combination with the predefined movement profile, for example.

Conveniently, the Al method is trained using training data during a training phase, wherein the training data are generated using a physical model mapping the at least one drive variable to the energization of the drive coils of the stator for predefined movement profiles. In this way, for example, high-quality training data can be obtained very easily from physical models in use (e.g. fundamental wave model, reluctance model, etc.) in a test environment, with which the Al method can be trained very easily.

Ideally, the Artificial intelligence method and the physical model are used in parallel for controlling the movement of the at least one shuttle during the training phase. Furthermore, a difference between the movement of the at least one shuttle determined by the Artificial intelligence method and the movement of the at least one shuttle determined with the physical model is determined and evaluated. Thus, the control quality and the accuracy of the Al method can be supervised quite easily in particular during the training. Furthermore, it is possible to recognize when the Al method meets the required accuracy to be used on a life linear motor system, for example.

In a preferred embodiment, a training of the Artificial intelligence method continues during operation of the linear motor system. This enables changes in the linear motor system (e.g. ageing, wear of motor parts, temperature-related changes, etc.) to be detected quickly and easily. Furthermore, training the Al method on a real linear motor system (at least partially) offers the possibility of considering customer-specific adaptations and/or mapping inaccuracies and parameter fluctuations in the real linear motor system.

Furthermore, it is advantageous, when the data for controlling the movement of the at least one shuttle generated during the training phase and/or during operation of the linear motor system are stored in a central storage unit and/or in a cloud-based storage. In this simple way, the collected data can also be used to train the Al method of other linear motor systems, enhancing the quality of the training data available. Furthermore, the Al method can also be used very easily for predictive maintenance.

In a preferred embodiment, an artificial neural network, in particular a physics-informed neural network, is used as Al method. The control strategy, in particular a physical model (e.g. fundamental wave model, reluctance model, etc.) used for modelling the control process can be easily approximated by an artificial neural network by training the artificial neural network based on training data determined with the physical model and the artificial neural network can then replace the physical model in the real linear motor system. In particular a physics-informed neural network may be used to approximate the non-linear system behavior of a linear motor system. A physics-informed neural network is a type of universal function approximator that can embed the knowledge of any physical behavior that govern a given dataset in the learning process or the dynamics of a system and can be described by partial differential equations. The embedded knowledge of physical behavior acts in the training of the neural network as a regularization agent that limits the space of admissible solutions, increasing the generalizability of a function approximation.

Alternatively, a combination of iterative Learning control and an artificial neural network, decision trees and/or support-vector machines may be used as Artificial intelligence method.

Furthermore, the objectives given above are achieved by a linear motor system, in particular in the form of a long-stator linear motor system or a planar motor system, wherein the linear motor system comprises at least one motion control unit for controlling a movement of the at least one shuttle relative to the stator, wherein the at least one motion control unit is configured to determine at least one drive variable for each time step from a predefined movement profile and/or a predefined target value of at least one movement variable for the at least one shuttle and an actual value of the at least one movement variable of the at least one shuttle, wherein the at least one motion control unit is also configured to determine the drive coils of the stator to be energized and a corresponding energization of the determined drive coils to be energized from at least one drive variable for each time step, to move the at least one shuttle corresponding to the predefined movement profile and/or according to the predefined target value of the at least one movement variable, from the at least one drive variable determined for each time step, wherein an Artificial intelligence method is implemented in the at least one motion control unit, which Artificial intelligence method at least determines the drive coils of the stator to be energized and the corresponding energization of the determined drive coils for each time step from at least one drive variable as an input variable.

In a preferred embodiment of the linear motor system, the at least one motion control unit is configured to control the movement of the at least one shuttle in a predefined segment of the stator. I.e., that the motion control unit is, for example, adapted to control a particular segment of the linear motor system, like e.g., linear segment, curved segment, switches, etc. of a long-stator linear motor system or a particular segment of a planar motor system.

Additionally, the linear motor system comprises a higher-level or central control unit being superior to the at least one motion control unit and being configured to provide predefined movement profiles and/or target values of movement variables for controlling the movement of the at least one shuttle.

Furthermore, it is advantageous, when the linear motor system is configured to determine the actual value of the at least one movement variable of the at least one shuttle and/or the linear motor system comprises at least one sensor arrangement providing sensor values to determine the actual value of the at least one movement variable of the at least one shuttle.

### BRIEF DESCRIPTION OF THE DRAWINGS

The present invention is described below in greater detail with reference to Figs. 1 to 4, which show schematic and non-limiting advantageous embodiments of the invention by way of example. In the drawings:
Fig.1 shows a block-diagram of a system for monitoring an automation system, according to an embodiment of the present invention;
Fig. 2 shows a flowchart of a method for operating the linear motor according to the embodiment of the present invention;
Fig. 3a shows an exemplary and generalized structure of an artificial neurol network as used as Al method in an embodiment of the present invention;
Fig. 3b shows an exemplary and generalized structure of an artificial neuron;
Fig. 4 shows an example of a training phase for an Al method used for operating the linear motor system.

### DETAILED DESCRIPTION

The invention is described using a very simplified representation of a linear motor system, which can be long-stator linear motor system, for example, as an embodiment of a linear motor system, but the invention can also be applied analogously to a planar motor system or a short-stator linear motor system as other embodiments of a linear motor system.

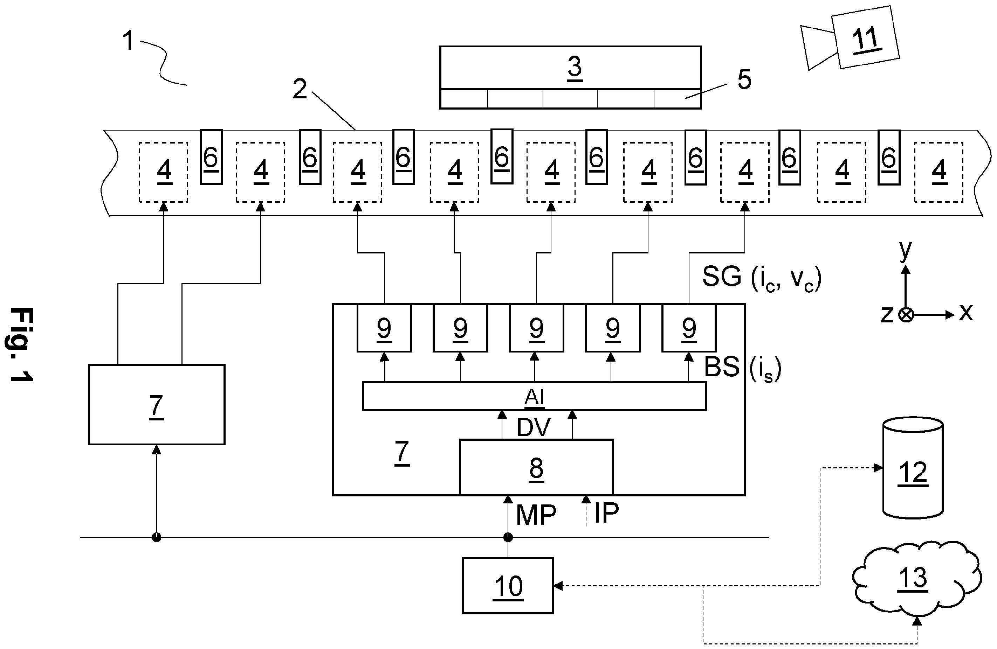

Fig.1 schematically and exemplary shows a section of a linear motor system 1, e.g. of a long-stator linear motor system or a planar motor system or a short-stator linear motor system, in a simplified manner.

The linear motor system 1 comprises a stator 2 and at least one shuttle 3, which is moveable relative to the stator 2. Usually, a plurality of shuttles 3, even different shuttles 3, are moved relative to the stator 2 at the same time and independently of each other - e.g., in case of a long-stator linear motor system, the shuttles 3 are usually moved along the stator 2 in a direction x of movement, or in case of a planar motor system, the shuttles 3 move mainly in two main directions x, z of movement on a movement plane xz defined by the stator 2. The structural design and the geometry of the stator 2 and the shuttle 3 are not important for the invention.

Drive coils 4 are arranged on the stator 2, for example in the direction x of movement in case of a long-stator linear motor system. As already mentioned, in a planar motor system, the drive coils 4 would be arranged in the movement plane xz defined by the stator 2. The at least one shuttle 3 comprises a magnet unit, which consists of a number of drive magnets 5. With a long-stator linear motor system, the drive magnets 5 are arranged next to each other and have opposite polarity in the movement direction x, for example. With a planar motor system, the drive magnets 5 are arranged in a plane on the shuttle 3. Furthermore, drive magnets 5 can be arranged not only on one side of the shuttle 3, but also on both sides of the shuttle 3 in the direction of movement x, for example if a stator 2 is arranged at least partially on both sides of the shuttle 3 in the direction of movement x in the linear motor system 1, such as in the area of switches. The magnet unit of the shuttle 3 faces the drive coils 4 of the stator 2 being separated from the surface of the stator 2 by an air gap. With a long-stator linear motor system, maintaining this air gap is usually secured by a mechanical and/or magnetic guidance of the shuttle 3 on the stator 2. With a planar motor system, there is usually no mechanical guidance of the shuttle 3, instead the shuttle 3 is kept floating above the stator 2 magnetically due to a levitation force provided by energizing the drive coils 4.

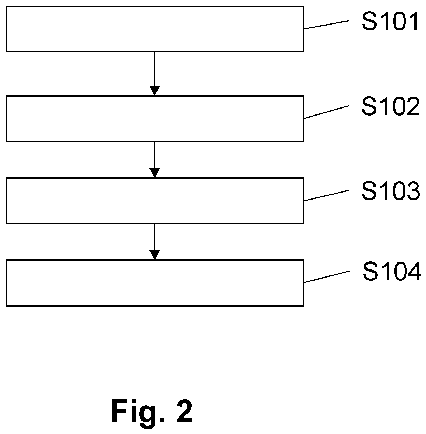

For a movement of the shuttle 3, a number of drive coils 4 in the area of the magnet unit of the shuttle 3 interact with the drive magnets 5 of the magnet unit. Which drive coils 4 and the number of the drive coils used for the movement of the shuttle 3 can be assumed to known and may be predefined, but the drive coils 4 and their number used for moving the shuttle 3 may also dependent on the position of the shuttle 3 relative to the stator 2 und may be defined by the method for operating a linear motor system 1 described below on basis of Fig. 2, which provides the respective drive coils 4 and/or the number of drive coils 4 in the area of the drive magnets 5 of the shuttle 3 to be energized and the energization of these drive coils 4. Due to the movement of the shuttle 3 relative to the stator 2, the drive coils 4 to be energized naturally change.

For controlling the movement of the at least one shuttle 3 on the stator 2, the linear motor system 1 comprises at least one motion control unit 7. The motion control unit 7 may be configured to control the movement of the at least one shuttle 3 in a predefined stator segment of the linear motor system 1 - as exemplary shown in Fig. 1. I.e., that the motion control unit 7 is responsible for controlling a predefined number of drive coils 4 or for the drive coils 4 of the stator segment and thus usually controls the movement of several shuttles 3 moving in relation to the stator segment the motion control unit 7 is responsible for. Small linear motor systems 1, which only comprise a small stator 2 or only one stator segment, may only comprise one motion control unit 7, for example, which is responsible for the whole stator 2.

Furthermore, usually the linear motor system 1 comprises a higher-level control unit 10 or central control unit 10, which is superior to the at least one motion control unit 7. The central control unit 10, for example, controls and monitors the simultaneous movement of several shuttles 3 on the stator 2, in particular if the stator 2 consists of more than one stator segment with each stator segment 2 having its own motion control unit 7 assigned, as exemplary shown in Fig. 1. But it may also be possible, for example with small linear motor systems 1 comprising only one stator segment and only one motion control unit 7 that the motion control unit 7 comprises the functionality of the central control unit 10 as well.

The higher-level control unit 10 or central control unit 10 is configured to provide the at least one motion control unit 7 with a predefined movement profile MP and/or at least with a predefined target value MP of at least one movement variable for controlling the movement of the shuttle 3 on the stator 2. The predefined movement profile MP may comprise target positions, target speed and/or target acceleration for one or more shuttles 3 moving on the stator 2 or on the segment of the stator 2 controlled by the motion control unit 7. The predefined target value MP of the at least one movement variable may be at least one of a target position, target speed and/or target acceleration, for example. The predefined target value MP may be provided directly to the motion control unit 7 or may be retrieved by the motion control unit 7 from the provided predefined movement profile MP. The higher-level control unit 10 or central control unit 10 provides the predefined motion profile MP and/or the target value MP of the at least one movement variable via data communication bus, for example, as indicated in Fig. 1.

The motion control unit 7 uses the predefined movement profile MP and/or the predefined target value MP of the at least one movement variable for controlling the movement of the at least shuttle 3 on the stator 2 or respective stator segment. Therefore, the motion control unit 7 is configured to determine at least one drive variable DV for each time step, usually in the range of 1/10 millisecond, from the predefined movement profile MP and/or from the predefined target value MP of the at least one movement variable for the at least one shuttle 3 and from an actual values IP of the at least one movement variable of the at least one shuttle 3. The at least one drive variable DV may comprise the necessary driving forces and/or driving torques, which have to act on the respective shuttle 3 in each time step, to move this shuttle 3 corresponding to the predefined movement profile MP and/or according to the predefined target value MP of the at least movement variable from its current position on the stator 2, for example. E.g., the drive variable DV may comprise a propulsive force to move the shuttle 3 along the stator 2 of the long-stator linear motor system, for example, or a levitation force as well as driving forces and/or driving torques to lift, move and/or rotate the shuttle 3 on the stator 2 of a planar motor system, for example.

Usually, as indicated in Fig.1, the motion control unit 7 uses a shuttle controller arrangement 8 to determine the at least one drive variable DV from the provided movement profile MP and/or the target value MP of the at least one movement variable and the actual value IP of the at least one movement variable. The shuttle controller arrangement 8 may comprise a shuttle controller (not shown in Fig. 1) for each shuttle 3 being moved on the segment of the stator 2, the motion control unit 7 is responsible for. Alternatively, the shuttle controller arrangement 8 may be configured to control all shuttles 3, which may move on the segment of the stator 2 controlled by the motion control unit 7. The shuttle controller arrangement 8 may be implemented within the motion control unit 7, as exemplary shown in Fig. 1. It is also possible that the shuttle controller arrangement 8 will be configured as separate unit. The shuttle controller arrangement 8 may be designed controller cascade, which at least comprises a position controller for position control and a speed controller for speed control (both not shown in Fig 1). The position controller determines the speed of the shuttle 3 to be adjusted from the predefined movement profile MP and/or from target position as predefined target value MP and an actual position of the shuttle 3, for example. The speed determined by the position control is used as actuating variable for the speed controller, which then determines the driving forces and/or driving torques from this determined speed, as for example described for a long-stator linear motor system in EP 3 251 986 A1. Furthermore, if shuttle controller arrangement 8 is designed as controller cascade, it may also comprise a field controller and/or an intelligent feedforward (both not shown in Fig. 1), which e.g., applies a value to the actuating variable of e.g. the position controller and/or the speed controller, the value being independent of the states of a controlled system and/or a resulting measurement.

Furthermore, the motion control unit 7 is configured to determine the respective drive coils 4 of the stator 2 or stator segment, which must be energized, as well as the corresponding energization BS of these determined drive coils 4 from the at least one drive variable DV for each time step. By energizing the determined drive coils 4 with the determined energization BS the shuttle 3 will be moved corresponding to the predefined movement profile MP and/or according to the predefined target value MP of the at least one movement variable on the stator 2. I.e., in each time step of the movement control, the motion control unit 7 determines the number of drive coils 4 or each drive coils 4 involved in the movement of the shuttle 3 and the corresponding energization BS of these determined drive coils 4 based on the predefined movement profile MP and/or the predefined target value MP of the at least one movement variable. To enhance the movement control, an Artificial intelligence method Al or short Al method Al is implemented in the motion control unit 7. The Al method Al is used at least to determine the number of drive coils 4 or the drive coils 4 being involved in moving the at least one shuttle 3 as well as the corresponding necessary energization BS for the drive coils 4 being involved in moving the at least one shuttle 3 for each time step. The Al method Al uses the at least one drive variable DV as an input variable, which comprises the driving forces and/or driving torques desired to move the shuttle 3.

Furthermore, the Al method Al may also replace the shuttle controller arrangement 8, at least partially. I.e., that the Al method Al may take over at least parts of the functionality of the shuttle controller arrangement 8, like e.g., the position control and/or speed control provided by the shuttle controller arrangement 8. In this case, the Al method Al also takes over the position control and/or speed control on the basis of the predefined movement profile MP and/or on the basis of a predefined target position and target speed and an actual position and speed of the shuttle 3, to determine the drive variable DV (e.g. the driving forces and/or driving torques), wherein there still may be a field controller and/or an intelligent feedforward used in the motion control unit 7, for example. It is also possible that the Al method Al replaces the whole shuttle controller arrangement 8. I.e., that the Al method also takes over the functionality of the field controller and/or intelligent feedforward, which are not shown in Fig. 1.

The energization BS determined by the Al method Al from the at least one drive variable DV, which represents the driving forces and/or driving torques, acting on the shuttle 3 for the desired movement on the stator 2, may directly comprise actuating variables SG for the individual drive coils 4 that are directly involved in the movement of the shuttle 3, for example. I.e., the drive coils 4, which are active, while the shuttle 3 is moving, are energized in such a way that the driving forces and/or driving torques required for the movement predefined by the movement profile MP and/or the target value MP of the at least one movement variable are generated.

However, a drive coil controller 9, as exemplary shown in Fig. 1, can also be provided for each drive coil 4, since the actuating variables SG of the individual drive coils 4, being involved in the movement of the shuttle 3, are usually not the same. Then, the energization BS, for example, represents target values (i.e., target currents iₛ) for the drive coil controllers 9 of each individual drive coil 4.

The actuating variable SG may be either a coil current iₛ or a coil voltage v_{c}, with which the individual drive coil 4 is energized. The coils current i_{c} or the coil voltage v_{c} may be generated and applied to each drive coils 4, involved in moving the shuttle 3, by a power electronics system (not shown in Fig. 1), for example as described in EP 3 249 803 A1. Usually, the actuating variable SG is a coil voltage v_{c}, applied to the drive coils 4. In case a coil current i_{c} is used as actuating value SG, a conversion into the corresponding coil voltage v_{c} may be provided, e.g. in the respective drive coil controller 9 or the motion control unit 7 or the power electronics system. It is also possible that drive coil controller 9 is a current controller, which controls the coil current i_{c}, for example. The drive coil controllers 9 may be integrated in the motion control unit 7, as exemplary shown in Fig. 1.

For controlling the movement of the at least one shuttle 3, it is also necessary to determine an actual value IP of the at least one movement variable, like e.g. an actual position, an actual speed, etc. of the at least one shuttle 3. The actual value IP of the at least one movement variable may be directly measured or retrieved or calculated from other measured sensor values. The linear motor system 1 may be configured to determine or estimate actual values IP (e.g. current position, etc.) of movement variables of the at least one shuttle 3 based on internal states provided by the motion control unit 7 (e.g., drive coils currently to be energized, etc.) and the predefined movement profile MP as well as its timeline. The linear motor system 1 may also comprise at least one sensor arrangement 6, 11, which provides sensor values for measuring or for retrieving or for calculating the actual value IP of at least one movement variable of the shuttle 3. For example, a current position of the at least one shuttle 3 on the stator 2 may be determined using a sensor arrangement 6 like position sensors 6, arranged on the stator 2, as shown in Fig. 1. A current speed of the at least one shuttle 3 may be retrieved or estimated from the position sensors 6, which the shuttle 3 passes during its movement on the stator 2. Furthermore, an additional sensor system 11, like e.g., a camera system, may be used to determine the actual value IP of at least one movement variable of the shuttle 3. With a planar motor system, an actual position of the shuttle 3 on the stator 2 and/or an actual orientation of the shuttle 3 can be retrieved using a camera system 11.

The motion control unit 7 may be a microprocessor-based hardware, on which the respective control software, in particular the Al method Al, is implemented and executed. The motion control unit 7 may also be implemented as computer software, which is installed and executed on available computer hardware. The motion control unit 7 can also be configured as an integrated circuit, like e.g., an application-specific integrated circuit (ASIC) or a Field Programmable Gate Array (FPGA), on which a microprocessor is implemented, for example. However, the motion control unit 7 may also be configured as an analog circuit, for example, as an analog computer. Combinations of these are also possible.

Furthermore, the higher-level control unit 10 or the central control unit 10 may be linked to a central storage unit 12 (e.g., database) via a data communication connection, for example. In the central storage unit 12, the movement profiles MP and/or target values MP of the at least one movement variable for the at least one shuttle 3, like e.g., target position, target speed, target acceleration, etc. may be stored to be retrieved by the central control unit 10 for the controlling process. Furthermore, training data for the Al method Al may be stored in the central storage unit 12, which training data were either provided during a trainings phase of the Al method Al or collected during operation of the linear motor system 1. Additionally or alternatively, the central control unit 10 may be linked to a cloud server having implemented and/or providing access to a cloud-based storage 13. In this case, the central control unit 10 may be configured as an Edge device or Edge computer. The cloud-based storage 13 may provide data from other linear motor systems 1 using the Al method Al for controlling the movement of the shuttles 3. The cloud stored data are highly available, e.g. via an Internet connection and may be used to provide federated learning for e.g. all motion control units 7 of the linear motor system 1 or of all linear motor systems 1, using the Al method Al for controlling the movement of the shuttles 3 and being deployed in a plant or of a manufacturer, for example.

Fig. 2 exemplary and schematically shows a flow chart of a method for operating the linear motor system 1, wherein linear motor systems 1 in the form of long-stator linear motor systems, short-stator linear motor system and planar motor system can be operated using the method.

During a control step S101, the at least one drive variable DV is determined for a respective time step from a predefined movement profile MP and/or a predefined target value MP of at least one movement variable for the at least one shuttle 3 and from an actual value IP of the at least one movement variable of the at least one shuttle 3 by the motion control unit 7. The at least one drive variable DV determined in the control step S101 represents the desired driving forces and/or driving torques for the respective time step (e.g. propulsive force to move the shuttle 3, levitation force to lift the shuttle 3, driving torque to tilt and/or to rotate the shuttle 3). These driving forces and/or driving torques are necessary to move the shuttle 3 relative to stator 2 corresponding to the predefined movement profile MP. I.e., the shuttle 3 shall be moved from its current position, e.g., at its current speed with a current acceleration, to a predefined target position, e.g., at a predefined target speed with a predefined target acceleration, for the respective time step, depending on the movement profile, e.g. defined for a stator segment the shuttle 3 is moving on.

The movement profile MP and/or in particular the target value MP of the at least one movement variable can be predefined for each time step of the control process. The at least one movement variable may be a position, a speed and/or an acceleration of the shuttle 3, wherein the predefined target value MP of that movement variable may be the target position, the target speed and/or the target acceleration for the respective time step. The predefined target value MP of the at least one movement variable may be provided by the higher-level control unit 10 or the central control 10. Alternatively, the higher-level control unit 10 or the central control 10 may provide the predefined movement profile MP for the shuttle 3. The target value MP of the at least one movement variable (e.g., position, speed, acceleration) can be retrieved from the provided predefined movement profile MP by the motion control unit 7 in the control step S101.

Furthermore, the actual value IP of the at least one movement variable has to be determined in the control step S101. The actual value IP may be e.g., the actual position, the actual speed, the actual acceleration, etc. of the shuttle 3. The actual value IP may be determined using sensor values provided by a sensor arrangement 6, 11 of the linear motor system 1. A provided sensor value may either be used as actual value IP of a movement variable, like i.e., the actual position of the shuttle 3 on the stator 2 measured by a position sensor 6, or the actual value IP of a movement variable may be calculated or estimated from a sensor value measured, like e.g., the actual speed of the shuttle 3. The actual value IP of the at least one movement variable also may be determined or estimated based on internal states provided by the motion control unit 7 (e.g., drive coils to be energized, etc.) and the predefined movement profile MP as well as its timeline.

In an input step S102 an Al method Al, implemented in motion control unit 7, for example, is provided with the at last one drive variable DV determined for the respective time step as an input variable. In case an artificial neural network or a physics-informed neural network is used as Al method Al, the drive variable DV, e.g. in the form of a vector comprising the desired driving forces and/or driving torques to move the shuttle 3 for the respective time step, forms the input x1, x2 of the neural network.

Then, in a mapping step S103, the Al method Al determines the drive coils 4 of the stator 2 to be energized and a corresponding energization BS of the determined drive coils 4 to be energized from at least one drive variable DV for the respective time step. The Al method Al determines, for example, the number of drive coils 4 or which drive coils 4 of the stator 2 have to energized for the respective time step, to move the shuttle 3, e.g., corresponding to the predefined movement profile MP and/or according to the predefined target value (e.g., target position, etc.) of the at least one movement variable. Furthermore, in the mapping step S103 the Al method Al also determines the energization BS of the drive coils 4, which were determined to be involved in moving the shuttle 3, for the respective time step. In case an artificial neural network or a physics-informed neural network is used as an Al method Al, the energization BS of the drive coils 4 may be represented by the output y, y1, y2 of the neural network.

Additionally, the Al method Al may be used in the control step S101, to determine the at least one drive variable DV for the respective time step from the predefined movement profile MP of the shuttle 3 and/or from the predefined target value MP of the at least one movement variable for the shuttle 3 and the actual value IP of the at least one movement variable of the shuttle 3. The Al method Al then uses the predefined movement profile MP and/or the predefined target value MP of the at least one movement variable as well as the actual value IP of the at least one movement variable as input variables. For this purpose, the Al method Al may at least partially replace the shuttle controller arrangement 8, taking over at least a position control and/or a speed control provided by the shuttle controller arrangement 8.

In an energizing step S104, the determined energization BS is applied, for example, to the drive coils 4 determined by the Al method Al in the mapping step S103. If the determined energization BS comprises actuating variables SG for the individual drive coils 4, for example, like e.g., a coil current i_{c} or a coil voltage v_{c} for each drive coil 4, the determined energization BS may be applied directly to the respective drive coils 4. The individual drive coils 4 are then energized with the coil current i_{c} or the coil voltage v_{c} in the energizing step S104 to move the shuttle 3 on the stator 2.

In case, drive coil controllers 9 are used, the determined energization BS may alternatively provide target values (i.e., target currents iₛ) for each individual drive coil 4 determined by the Al method Al in the mapping step S103. These target values (i.e., target currents iₛ) are provided to the drive coil controllers 9 to control the coil current i_{c} or the coil voltage v_{c} of the respective drive coils 4 in the energizing step S104 and to move the shuttle 3 on the stator 2 corresponding to the predefined movement profile MP and/or according to the predefined target value MP of the at least one movement variable.

For controlling the movement of the shuttle 3, the energization BS for the drive coils 4, necessary to move the shuttle 3, is determined for each time step by the method for operating the linear motor system 1 using an Al method Al. Additionally, the actuating variable SG, coil current i_{c} or coil voltage v_{c}, with which the drive coils 4 are energized to generate the magnetic fluxes for the movement of the shuttle 3, is also determined for each drive coil 4 involved in moving the shuttle 3 for each time step.

An artificial neural network (ANN), in particular a physics-informed neural network, can be used as Al method Al implemented in the motion control unit 7. Alternatively, a combination of iterative learning control and an ANN, decision trees and/or support-vector machines may be used as Al method Al implemented in the motion control unit 7.

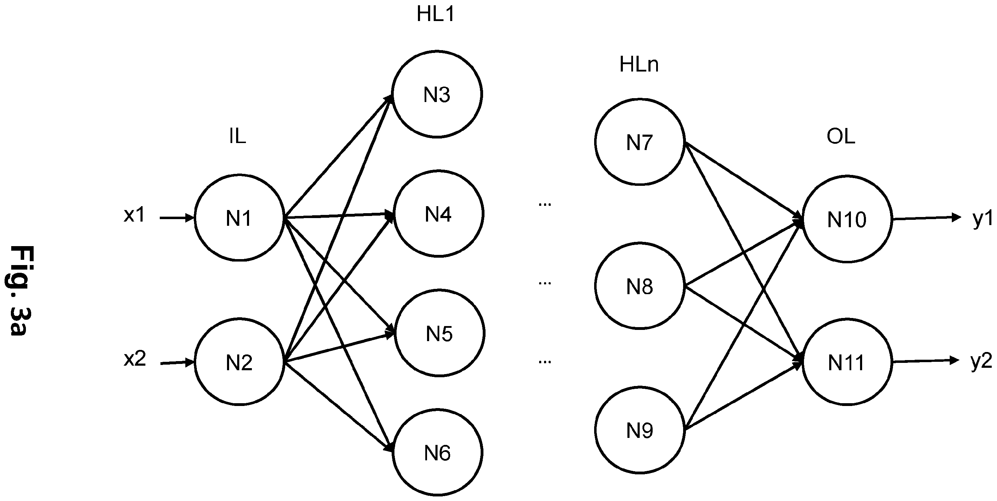

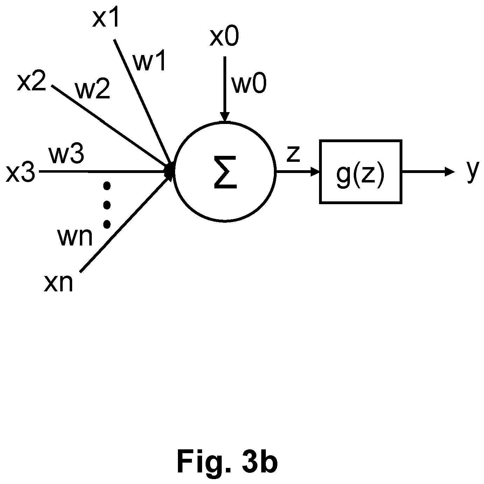

An artificial neural network is a model inspired by the structure and function of biological neural network in animal brains, but usually represents a simplified abstraction model of a biological neural network. An ANN consists of units or nodes called artificial neurons, which are net-like connected by so-called edges. The structure of an ANN is, for example, known from Rey, Günter Daniel; Wender, Karl F.: "Neuronale Netze - Eine Einführung in die Grundlagen, Anwendungen und Oatenauswertung", 2. Auflage, Huber Verlag, 2010*.* An exemplary and generalized structure of an ANN is shown in Fig. 3a and Fig. 3b shows an example of a generalized basic structure of an artificial neuron N1 to N11 with two exemplary input connections.

Fig. 3a shows exemplary the structure of a multi-layer, so-called "feedforward neural network", wherein the structure and size of the neural network, in particular the number of the so-called hidden layers HL1 to HLn, is directly related to the trainings method used and the complexity of the task to be solved (e.g., mapping desired driving forces and/or driving torque acting on a shuttle 3 to the energization of drive coils 4 of the stator 2), for example, but the structure may also depend on the accuracy of the description of the control process, the efficiency of the superimposed control, the computing and learning effort, etc. The ANN comprises a number of artificial neurons N1 to N11, which are used to receive information and/or data from the environment or from other neurons N1 to N9 and pass the information and/or data on to other neurons N1 to N11 or the environment in modified form. For this purpose, the neurons N1 to N11 are grouped into different layers IL, HL1 to HLn, OL, for example and net-like connected with each other. The ANN may, for example, comprise an input layer IL consisting of input neurons N1, N2, one or usually more hidden layers HL1 to HLn and an output layer OL consisting of output neurons N10, N11. Information, data or signals x1, x2 are received by the input layer IL or the input neurons N1, N2. If an ANN is used as Al method Al in the motion control unit 7 for the determination of the drive coils 4 to be energized and the energization of these drive coils 4, for example, the input layer IL may result from the at least one drive variable DV, which represents the driving forces and/or driving torques e.g., in form of a force vector or matrix. If the Al method Al also replaces the shuttle controller arrangement 8 at least partially, the input layer IL may result from the position and/or the speed of the shuttle 3. Other objectives may also be used, e.g., optimal operation vs. high dynamics and thermal limitations of currents, which a temperature, e.g., measured in the linear motor system 1, as input, for example.

The outputs of the input neurons N1 and N2 are connected to the neurons N3 to N6 of a first hidden layer HL1. The ANN may comprise further hidden layers HLn. The number of the hidden layer HL1 to HLn as well as the individual size of the hidden layers HL1 to HLn can be estimated based on the experience with the requirements of the particular task to be solved and depends on the complexity of the particular task to be solved. The final hidden layer HLn or the outputs of its neurons N7, N8, N9 are connected to the output neurons N10, N11 of the output layer OL. The output neurons N10, N11 output signals and/or output data y1, y2 via their outputs. With the ANN used as Al method Al in the motion control unit 7, the output layer OL or the output data y1, y2 of its output neurons N10, N11 may represent the energization BS of the drive coils 4 - e.g., in form of a vector or matrix providing the necessary target currents iₛ for the drive coils 4 to be set to move the shuttle 3.

As shown in Fig. 3b, a neuron N1 to N11 receives its input values x0 to xn either in form of information, signals or data from the environment (e.g., the motion control unit 7 or the linear motor system 1 or the higher-level or central control unit 10) or in form of output of neurons N1 to N11. The input values x0 to xn are each linked with a weighting or weight factors w0 to wn. The weighting or the weight factors w0 to wn are determined by training of the ANN and defined the ANN significantly. A starting weighting w0 to wn may be specified for each neuron N1 to N11 before a training phase, wherein a maximum possible value for the respective weighting or weight factor w0 to wn may be used as the starting weighting w0 to wn of the respective neuron N1 to N11. During the training phase the weighting w0 to wn can be varied accordingly, using training data to train the ANN, for example. Furthermore, the artificial neuron N1 to N11 may comprise a so-called bias-input w0 with an input value x0 of 1. This bias-input w0 usually does not have any connection to the previous layer of the ANN.

The functionality of the neuron N1 to N11 is described by a transfer function Σ and an activation function g(z). Using the transfer function Σ, a network input z of the neuron N1 to N11 is calculated based on the weighting w0 to wn of the input values x0 to xn, considering the input value x0 of the bias-input w0, if necessary. The output y of the neuron N1 to N11 is defined by the activation function g(z). Different function types may be used for the activation function g(z) depending on the respective network topology. The activation function g(z) may be used to realize any non-linearities in the ANN, if necessary. Common activation functions g(z) include linear functions, partially linear functions, binary step functions, sigmoid functions, logistic functions, etc. Rectified linear unit (ReLU) functions are also quite frequently used as activation function g(z). The value of the activation function g(z) is also the feature or the output y of the individual neuron N1 to N11.

The selected size of the ANN can result in a structured system of equations, wherein the output y, y1, y2 of the ANN is an output vector or matrix providing the necessary target currents iₛ for the drive coils 4 to be set to move the shuttle 3 and the input x1, x2 to xn may be the at least one drive variable DV in form of a vector with the desired driving forces and/or driving torques to move the shuttle 3 in accordance with the predefined movement profile MP and/or the predefined target values of the movement variables. The structured system of equations also comprises a matrix of the weighting or weight factors w1 to wn with a vector comprising the weight factors w0 of the bias-neurons, if applicable. These weighting or weight factors w0 to wn must be trained, subsequently.

For a training process of the Al method Al, especially when using an ANN or a physics-informed neural network as the Al method Al, common, well-known approaches can be chosen, such as e.g., supervised learning, wherein the Al method Al is trained using training data as input data and desired output values which are evaluated, or reinforcement learning using trial and error and reward maximization.

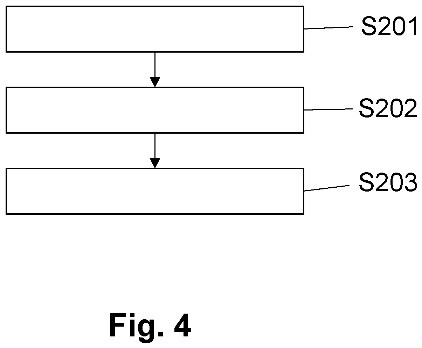

Fig. 4 shows an example of a training phase for the Al method Al used for operating the linear motor system 1. During the training phase, the Al method Al is trained using training data in a training step S202. The training data are generated in the training phase during a generation step S201, which precedes the training step S202. The training data are generated using a physical model, like e.g., the fundamental wave model or the reluctance model, for example. These model approaches are usually used for control strategies of linear motor systems 1, in particular, to describe a mapping of the at least one drive variable DV (e.g. desired driving forces and/or driving torques, in particular in the form of vector) as an input variable on the energization BS of the individual drive coils 4 as output variables, as already described above at the beginning. Using such classic approaches or physical model (e.g., fundamental wave model, reluctance model) currently in use in test environments, but also for systems in operation. a large amount of high-quality training data can be generated during the generation step S201, e.g., using predefined movement profiles MP. These training data may be stored in the central storage unit 12 and/or in the cloud-based storage 13 to be easily available for the training step S202 of the Al method Al.

Using supervised learning to train the Al method Al in the training step S202, the physical model (e.g., fundamental wave model, reluctance model) can be used to generate output data for predefined movement profiles MP and/or for predefined target values MP of movement variables (e.g., positions, speed, etc.) in a test environment in the generation S201, for example. Alternatively, pairs of corresponding input data and output data, which are determined by linear motor systems 1 in operation, may also be used as training data, for example.

Alternatively, reinforcement learning may be possible to use to train the Al method Al during the training step S202 of the trainings phase.

Furthermore, it is possible that Al method Al and the physical model, e.g. both implemented in the motion control unit 7, are used in parallel in the training step S202. Both are provided with the same input data - e.g., moving a shuttle 3 corresponding to a predefined movement profile MP on the stator 2. Then a difference between the movement of the shuttle 3 determined by the Al method Al and the movement of the shuttle 3 determined with the physical model is determined and evaluated. For example, the energization BS of the drive coils 4 determined by the Al method Al and the energization BS of the drive coils 4 determined with the physical model are compared (e.g., coil currents i_{c}, control error, accuracy of movement, etc.). The detected difference can then be evaluated, e.g. by comparison with a threshold value, to assess the accuracy and/or to evaluate training status of the AI method AI.

However, it is also conceivable that the Al method and the physical model could be used in parallel during operation of linear motor system 1 to monitor and supervise the Al method.

After completing the trainings step S202, the Al method Al can be used to its full extent. E.g., if an ANN is used as Al method Al, the training step S202 is completed, when the weighting or weight factors w0 to wn of the neural network are optimized in such a way, that the differences between the predicted output and the actual target values is minimized for the given training data, for example.

The trained Al method Al can be "frozen" and implemented e.g. in the at least one motion control unit 7 in deployment step S203, to be used in the linear motor system 1 during operation. In a useful embodiment of the training phase, the final learning process of the Al method Al is carried out on the real operational linear motor system 1 instead of in a test environment in the deployment step S203, to consider possible resulting inaccuracies and/or parameter fluctuations in the operational linear motor system 1.

Alternatively, it would also be possible not to "freeze" the training of the Al method Al, but to continue the training after the deployment step S203. I.e., the Al method Al implemented in the at least one motion control 7 of the linear motor system 1 continues to train during the operation of the linear motor system 1.In this way, it is possible to consider changes in the linear motor system 1 over time and adapt the Al method Al to these changes (e.g., wear, temperature, etc.). Additionally, the Al method Al may be used for monitoring the linear motor system 1 - e.g., for predictive maintenance. For example, due to control errors, deviations in the movement control of the shuttles 3, the Al method Al may recognize changes such as changes in bearings, wear of guide-elements of shuttle, temperature-related deformation of the stator 2, etc. can be detected early.

Furthermore, it may be possible to collect the data for controlling the movement of the at least one shuttle 3, which are generated during the training phase e.g., in a test environment and/or during operation of the linear motor system 1, by the Al method Al or while using the Al method Al. The collected data may be stored in a central storage unit 12 of the linear motor system 1 and/or in a cloud-based storage 13. In this way, the data are available e.g., as training data, for other linear motor systems 1 and can be used across several linear motor systems 1, for example, to train the Al method Al implemented in the motion control units 7 of the individual linear motor systems 1. The respective Al method Al then only needs to be adapted locally to the respective linear motor system 1.

## Claims

1. A method for operating a linear motor system (1), in particular a long stator linear motor system or a planar motor system, comprising a stator (2), on which a plurality of drive coils (4) is arranged, and comprising at least one shuttle (3), which moves relative to the stator (2) and on which several drive magnets (5) are arranged, wherein an electromagnetic field, which interacts with the drive magnets (5) of the at least one shuttle (3) for moving the at least one shuttle (3), is generated by energizing drive coils (4) in the area of the drive magnets (5) of the at least one shuttle (3), ***characterized, in that*** at least one drive variable (DV) is determined for a respective time step from a predefined movement profile (MP) and/or a predefined target value (MP) of at least one movement variable for the at least one shuttle (3) and from an actual value (IP) of the at least one movement variable of the at least one shuttle (3) (S101);
***in that*** an Artificial intelligence method (AI) is provided with the at least one drive variable (DV) determined for the respective time step as an input variable (S102);
***and in that*** the Artificial intelligence method (AI) determines the drive coils (4) of the stator (2) to be energized and a corresponding energization (BS) of the determined drive coils (4) to be energized from at least one drive variable (DV) for the respective time step (S103), to move the at least one shuttle (3) corresponding to the predefined movement profile (MP) and/or according to the predefined target value (MP) of the at least one movement variable (S104).

2. The method according to claim *1, **characterized, in that*** the Artificial intelligence method (AI) also determines the at least one drive variable (DV) for the respective time step from the predefined movement profile (MP) and/or from the predefined target value (MP) of the at least one movement variable for the at least one shuttle (3) and the actual value (IP) of the at least one movement variable of the at least one shuttle (3) as input variables (S101).

3. The method according to claim 1 or 2, ***characterized, in that*** the actual value (IP) of the at least one movement variable of the at least one shuttle (3) is estimated by using the predefined movement profile (MP) and/or is determined using sensor values being provided by at least one sensor arrangement (6, 11) of the linear motor system (1) (S101).

4. The method one of the claims 1 to 3, ***characterized, in that*** during a training phase, the Artificial intelligence method (AI) is trained using training data (S202), wherein the training data are generated using a physical model mapping the at least one drive variable (DV) to the energization (BS) of the drive coils (4) of the stator (2) for predefined movement profiles (MP) (S201).

5. The method according to claim 4, ***characterized, in that*** during the training phase, the Artificial intelligence method (AI) and the physical model are used in parallel for controlling the movement of the at least one shuttle (3).

6. The method according to claim 4 or claim 5, ***characterized in that*** during the training phase, a difference between the movement of the at least one shuttle (3) determined by the Artificial intelligence method (AI) and the movement of the at least one shuttle (3) determined with the physical model is determined and evaluated.

7. The method according to one of the claims 1 to 6, ***characterized, in that*** a training of the Artificial intelligence method (AI) continues during operation of the linear motor system (1).

8. The method according to one of the claims 1 to 7, ***characterized, in that*** the data for controlling the movement of the at least one shuttle (3) generated during the training phase and/or during operation of the linear motor system (1) are stored in a central storage unit (12) and/or in a cloud-based storage (13).

9. The method according to one of the claims 1 to 8, ***characterized, in that*** the Artificial intelligence method (AI) is furthermore used for predictive maintenance.

10. The method according to one of claims 1 to 9, ***characterized, in that*** an artificial neural network, in particular a physics-informed neural network, a combination of iterative Learning control and an artificial neural network, decision trees and/or support-vector machines are used as Artificial intelligence method (AI).

11. Linear motor system (1), in particular a long stator linear motor system or a planar motor system, comprising a stator (2), on which a plurality of drive coils (4) is arranged, and comprising at least one shuttle (3), which is movable relative to the stator (2) and on which several drive magnets (5) are arranged, wherein an electromagnetic field, which interacts with the drive magnets (5) of the at least one shuttle (3) for moving the at least one shuttle (3), is generated by energizing drive coils (4) in the area of the drive magnets (5) of the at least one shuttle (3), ***characterized. in that*** the linear motor system (1) comprises at least one motion control unit (7) for controlling a movement of the at least one shuttle (3) relative to the stator (2), ***in that*** the at least one motion control unit (7) is configured to determine at least one drive variable (DV) for each time step from a predefined movement profile (MP) and/or a predefined target value (MP) of at least one movement variable for the at least one shuttle (3) and an actual value (IP) of the at least one movement variable of the at least one shuttle (3), ***in that*** the at least one motion control unit (7) is also configured to determine the drive coils (4) of the stator (2) to be energized and a corresponding energization (BS) of the determined drive coils (4) to be energized from at least one drive variable (DV) for each time step, to move the at least one shuttle (3) corresponding to the predefined movement profile (MP) and/or according to the predefined target value of the at least one movement variable, from the at least one drive variable (DV) determined for each time step, ***and in that*** an Artificial intelligence method (AI) is implemented in the at least one motion control unit (7), which Artificial intelligence method (AI) at least determines the drive coils (4) of the stator (2) to be energized and the corresponding energization of the determined drive coils (4) for each time step from at least one drive variable (DV) as an input variable.

12. Linear motor system (1) according to claim 11, ***characterized, in that*** the at least one motion control unit (7) is configured to control the movement of the at least one shuttle (3) in a predefined segment of the stator (2).

13. Linear motor system (1) according to claim 11 or 12, ***characterized, in that*** the linear motor system (1) comprises a higher-level or central control unit (10) being superior to the at least one motion control unit (7) and being configured to provide predefined movement profiles (MP) and/or target values (MP) of movement variables for controlling the movement of the at least one shuttle (3).

14. Linear motor system (1) according to any of claims 11 to 13, ***characterized, in that*** the linear motor system (1) is configured to determine the actual value (IP) of the at least one movement variable of the at least one shuttle (3) and/or the linear motor system (1) comprises at least one sensor arrangement (6, 11) providing sensor values to determine the actual value (IP) of the at least one movement variable of the at least one shuttle (3).
